# EUROPÄISCHE PATENTSCHRIFT

(11) **EP 3 649 036 B1**
(45) Veröffentlichungstag und Bekanntmachung des Hinweises auf die Patenterteilung: **08.12.2021**
(21) Anmeldenummer: 18721340.0
(22) Anmeldetag: 26.04.2018
(51) Int. Cl.: B62D 5/04

(54) **VERFAHREN ZUM BETRIEB EINES LENKSYSTEMS UND LENKSYSTEM**
METHOD OF OPERATING A STEERING SYSTEM AND STEERING SYSTEM
PROCÉDÉ POUR LE FONCTIONNEMENT D'UN SYSTÈME DE DIRECTION ASSISTÉE ET UNE DIRECTION ASSISTÉE

(30) Priorität: 03.07.2017 DE 102017211278
(43) Veröffentlichungstag der Anmeldung: 13.05.2020
(73) Patentinhaber: Robert Bosch GmbH, 70442 Stuttgart (DE)
(72) Erfinder: PITTNER, Raphael, 73547 Lorch (DE)
(86) Internationale Anmeldenummer: PCT/EP2018/060730
(87) Internationale Veröffentlichungsnummer: WO 2019/007563

(56) Entgegenhaltungen:
- WO-A1-2016/098557
- DE-A1-102012 023 073
- DE-A1-102015 115 118
- JP-A- 2006 111 032

## Beschreibung

### Stand der Technik

Die Erfindung geht aus von einem Verfahren zum Betrieb eines Lenksystems nach dem Oberbegriff des Anspruchs 1 sowie von einem Lenksystem nach dem Oberbegriff des Anspruchs 11.

Zudem betrifft die Erfindung ein Steuergerät gemäß Anspruch 10.

Aus der DE 10 2006 051 799 A1 ist ein elektrisch unterstütztes Lenksystem bekannt, welches ein Lenkgetriebe, eine elektrisch ausgebildete Unterstützungseinheit zur Erzeugung und/oder Bereitstellung einer Lenkunterstützung sowie eine Sensoreinrichtung zur Flüssigkeitseintrittserkennung aufweist. Die Sensoreinrichtung ist dabei hauptsächlich zur Erfassung eines Wassereintritts in ein Servomotor-Gehäuse der Unterstützungseinheit vorgesehen und erlaubt keine differenzierte Erkennung von in das Lenksystem eindringenden Fluiden, wie beispielsweise die Erkennung unterschiedlicher Fluide oder die Erkennung von Fluiden in unterschiedlichen Bereichen des Lenksystems. Dies führt dazu, dass ein Reaktionsverhalten des Lenksystems auf einen Wassereintritt, insbesondere unabhängig von einer Eintrittsmenge und/oder einer Eintrittsposition, stets gleich ausfällt und keine situationsabhängig angepasste Reaktion des Lenksystems möglich ist, wodurch eine Flexibilität des Lenksystems stark eingeschränkt wird. Aus der DE 10 2015 115118 A1 ist ein Verfahren zum Betrieb eines Lenksystems nach dem Oberbegriff des Anspruchs 1 bekannt.

Die Aufgabe der Erfindung besteht insbesondere darin, ein Verfahren zum Betrieb eines Lenksystems und ein Lenksystem mit verbesserten Eigenschaften hinsichtlich einer Flexibilität und insbesondere einem vorteilhaft flexiblen Reaktionsverhalten bereitzustellen. Die Aufgabe wird durch die kennzeichnenden Merkmale der Ansprüche 1, 11 und 14 sowie die Merkmale des Anspruchs 10 gelöst, während vorteilhafte Ausgestaltungen und Weiterbildungen der Erfindung den Unteransprüchen entnommen werden können.

### Offenbarung der Erfindung

Die Erfindung geht aus von einem Verfahren zum Betrieb eines Lenksystems, insbesondere eines elektrisch unterstützten Lenksystems, wobei das Lenksystem wenigstens eine erste Fluidsensoreinheit zur Erfassung wenigstens eines eindringenden ersten Fluids, insbesondere einer ersten Fremdsubstanz, und zumindest eine räumlich getrennt von der ersten Fluidsensoreinheit angeordnete zweite Fluidsensoreinheit zur Erfassung wenigstens eines eindringenden zweiten Fluids, insbesondere einer zweiten Fremdsubstanz, umfasst.

Es wird vorgeschlagen, das Verfahren nach Anspruch 1 auszuführen.

Durch diese Ausgestaltung kann insbesondere ein Verfahren mit einer vorteilhaft hohen Flexibilität bereitgestellt werden. Insbesondere kann dabei ein vorteilhaft flexibles und/oder situationsabhängiges, Reaktionsverhalten erreicht werden, welches vorteilhaft an unterschiedliche Fehlbetriebe angepasst ist. Ferner können vorteilhaft als Reaktion auf die Erfassung eines Fluids unterschiedliche Maßnahmen getroffen werden, wie beispielsweise eine Komplettabschaltung des Lenksystems, eine Degradierung des Lenksystems, ein Wechsel in einen bestimmten Fahrmodus und/oder lediglich ein Erzeugen einer Hinweismeldung und/oder Warnmeldung.

Unter einem "Lenksystem" soll in diesem Zusammenhang insbesondere zumindest ein Teil, insbesondere eine Unterbaugruppe, eines Fahrzeugs und vorzugsweise eines Kraftfahrzeugs verstanden werden. Insbesondere ist das Lenksystem dabei zumindest zu einer Beeinflussung einer Fahrtrichtung des Fahrzeugs vorgesehen. Dabei umfasst das Fahrzeug vorteilhaft zumindest zwei unterschiedliche Fahrmodi, insbesondere einen konventionellen und/oder manuellen Fahrmodus und einen autonomen und/oder teilautonomen Fahrmodus. Ferner soll unter einem "elektrisch unterstützten Lenksystem" insbesondere ein Lenksystem mit einer elektrischen Hilfskraftunterstützung verstanden werden, bei welcher insbesondere zumindest eine Unterstützungseinheit zur Erzeugung und/oder Bereitstellung einer Lenkunterstützung elektrisch ausgebildet ist und insbesondere zur Erzeugung der Lenkunterstützung einen, vorzugsweise als Elektromotor ausgebildeten, Motor umfasst. Zudem umfasst das Lenksystem insbesondere wenigstens eine Recheneinheit, welche insbesondere dazu vorgesehen ist, das Verfahren zum Betrieb des Lenksystems auszuführen. Darüber hinaus kann das Lenksystem weitere Bauteile und/oder Baugruppen umfassen, wie beispielsweise wenigstens eine Lenkeinheit, wenigstens eine Lenksäule, wenigstens ein Lenkgetriebe, wenigstens eine, insbesondere mit dem Lenkgetriebe in Wirkverbindung stehende, Unterstützungseinheit zur Erzeugung und/oder Bereitstellung einer Lenkunterstützung und/oder wenigstens eine Ausgabeeinheit zur Ausgabe einer, insbesondere akustischen, haptischen und/oder optischen, Hinweismeldung und/oder Warnmeldung in Abhängigkeit von einem erfassten Fluid. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Fluidsensoreinheit" soll insbesondere eine, insbesondere mit der Recheneinheit in Wirkverbindung stehende, Einheit verstanden werden, welche zu einer Erfassung wenigstens eines Fluids, vorzugsweise mit einem bestimmten Aggregatszustand, insbesondere eines Gases oder einer Flüssigkeit, vorgesehen ist. Insbesondere umfasst die Fluidsensoreinheit dazu wenigstens ein Sensorelement, welches vorteilhaft als passiver und/oder aktiver Sensor ausgebildet sein kann. Darüber hinaus ist die Fluidsensoreinheit insbesondere dazu vorgesehen, ein mit dem erfassten Fluid korreliertes Erfassungssignal bereitzustellen und insbesondere drahtlos und/oder voreilhaft leitungsgebunden an die Recheneinheit weiterzuleiten. Das erste Fluid und/oder das zweite Fluid kann im vorliegenden Fall insbesondere ein Gas, vorzugsweise eine, insbesondere relative, Luftfeuchtigkeit, oder eine Flüssigkeit, vorzugsweise Wasser, insbesondere Regenwasser, Flusswasser und/oder verunreinigtes Wasser, wie beispielsweise von der Straße, sein. Darunter, dass "die Fluidsensoreinheiten räumlich getrennt voneinander angeordnet sind" soll insbesondere verstanden werden, dass die Fluidsensoreinheiten unterschiedlichen räumlichen Bereichen, welche insbesondere fluidtechnisch voneinander abgetrennt sind, zugeordnet sind und/oder in unterschiedlichen räumlichen Bereichen, welche insbesondere fluidtechnisch voneinander abgetrennt sind, angeordnet sind. Besonders bevorzugt sind die erste Fluidsensoreinheit und die zweite Fluidsensoreinheit dabei von redundanten Fluidsensoreinheiten zur reinen Erhöhung einer Betriebssicherheit verschieden.

Des Weiteren soll unter einer "Recheneinheit" insbesondere eine elektronische Einheit verstanden werden, welche einen Informationseingang, eine Informationsverarbeitung und eine Informationsausgabe aufweist. Vorteilhaft weist die Recheneinheit ferner zumindest einen Prozessor, zumindest einen Speicher, zumindest ein Ein- und/oder Ausgabemittel, zumindest ein Betriebsprogramm, zumindest eine Steuerroutine, zumindest eine Regelroutine, zumindest eine Berechnungsroutine, zumindest eine Auswerteroutine und/oder zumindest eine Auslöseroutine auf. Insbesondere ist die Recheneinheit zumindest dazu vorgesehen, der ersten Fluidsensoreinheit wenigstens ein erstes Reaktionsverhalten und der zweiten Fluidsensoreinheit wenigstens ein von dem ersten Reaktionsverhalten zumindest teilweise abweichendes zweites Reaktionsverhalten zuzuordnen und insbesondere als Reaktion auf die Erfassung des ersten Fluids das erste Reaktionsverhalten und als Reaktion auf die Erfassung des zweiten Fluids das zweite Reaktionsverhalten auszulösen. Vorzugsweise ist die Recheneinheit zudem in ein Steuergerät des Lenksystems integriert. Darüber hinaus soll unter einem "Reaktionsverhalten" insbesondere ein bestimmtes Verhalten und/oder eine bestimmte Reaktion der Recheneinheit und/oder des Lenksystems verstanden werden, welches/welche bei Erfassung des entsprechenden Fluids ausgelöst und/oder ausgeführt wird, insbesondere zur Vermeidung eines Fehlverhaltens des Lenksystems und/oder einer Gefährdung eines Insassen des Fahrzeugs. Insbesondere kann das Reaktionsverhalten dabei aus genau einer Aktion bestehen, welche insbesondere unmittelbar nach Erfassung des Fluids oder zeitverzögert zur Erfassung des Fluids ausgelöst und/oder ausgeführt werden kann. Alternativ oder zusätzlich kann ein Reaktionsverhalten jedoch auch vorteilhaft mehrere Aktionen umfassen, welche insbesondere gleichzeitig und/oder zeitlich nacheinander, wie beispielsweise in regelmäßigen zeitlichen Abständen, ausgelöst und/oder ausgeführt werden. Das Reaktionsverhalten kann dabei unter anderem Aktionen, wie beispielsweise eine Komplettabschaltung des Lenksystems, eine Degradierung des Lenksystems, insbesondere ein Abschalten bestimmter Bauteile und/oder Baugruppen des Lenksystems und/oder ein Betrieb mit verminderter Leistung, einen Wechsel und/oder ein Verlassen eines aktuellen Fahrmodus und/oder ein Erzeugen einer, insbesondere akustischen, haptischen und/oder optischen, Hinweismeldung und/oder Warnmeldung, umfassen.

Das erste Reaktionsverhalten und das zweite Reaktionsverhalten könnten beispielsweise eine identische Aktion auslösen und/oder ausführen und sich lediglich in einer Geschwindigkeit der Reaktion unterscheiden. Vorteilhaft wird jedoch vorgeschlagen, dass sich das erste Reaktionsverhalten und das zweite Reaktionsverhalten zumindest in einer Art einer Reaktion und somit insbesondere in zumindest einer ausgelösten und/oder ausgeführten Aktion voneinander unterscheiden, wodurch insbesondere ein vorteilhaft an unterschiedliche Bedingungen anpassbares Lenksystem bereitgestellt werden kann.

Ferner wird vorgeschlagen, dass sich das erste Reaktionsverhalten und das zweite Reaktionsverhalten zumindest in einer Geschwindigkeit einer Reaktion und somit insbesondere in einer Zeitdauer bis zur Auslösung und/oder Ausführung zumindest einer Aktion voneinander unterscheiden. Hierdurch kann insbesondere ein situationsabhängig angepasstes Reaktionsverhalten erreicht werden.

Darüber hinaus wird vorgeschlagen, dass das erste Reaktionsverhalten eine zeitlich schnellere Reaktion, insbesondere je nach Anforderung in einem Zeitraum von höchstens 15 min, vorteilhaft von höchstens 5 min, vorzugsweise von höchstens 1 min und besonders bevorzugt von höchstens 30 s, und das zweite Reaktionsverhalten eine im Vergleich zum ersten Reaktionsverhalten zeitlich langsamere Reaktion, insbesondere je nach Anforderung in einem Zeitraum von zumindest mehreren Stunden, zumindest mehreren Tagen, zumindest mehreren Wochen oder zumindest mehreren Monaten, bewirkt. Hierdurch kann insbesondere ein Reaktionsverhalten vorteilhaft an unterschiedliche Bedingungen und/oder unterschiedlich kritische Fehlerzustände angepasst werden. Zudem kann in einem unkritischen Fehlerzustand einem Fahrer beispielsweise noch die Möglichkeit gegeben werden selbst eine Werkstatt anzusteuern, wodurch vorteilhaft ein Komfort gesteigert und/oder Kosten minimiert werden können.

In einer weiteren Ausgestaltung der Erfindung wird vorgeschlagen, dass bei zumindest einem der Reaktionsverhalten, insbesondere dem ersten Reaktionsverhalten und/oder dem zweiten Reaktionsverhalten, ein aktueller Fahrmodus, insbesondere aus einer Gruppe unterschiedlicher Fahrmodi umfassend zumindest einen konventionellen und/oder manuellen Fahrmodus und einen autonomen und/oder teilautonomen Fahrmodus, berücksichtigt wird und eine mit dem Reaktionsverhalten verknüpfte Reaktion und somit insbesondere eine ausgelöste und/oder ausgeführte Aktion in Abhängigkeit von dem aktuellen Fahrmodus angepasst wird. Vorteilhaft fällt somit eine mit dem entsprechenden Reaktionsverhalten verknüpfte Aktion und/oder Reaktion unterschiedlich aus, je nachdem ob der aktuelle Fahrmodus ein konventioneller und/oder manueller Fahrmodus oder ein autonomer und/oder teilautonomer Fahrmodus ist. Besonders bevorzugt umfasst das zumindest eine Reaktionsverhalten dabei in zumindest einem Betriebszustand, in welchem ein aktueller Fahrmodus ein autonomer und/oder teilautonomer Fahrmodus ist, zumindest eine Aktion, welche zu einem Verlassen des autonomen und/oder teilautonomen Fahrmodus führt. Durch diese Ausgestaltung kann vorteilhaft eine Betriebssicherheit erhöht werden.

Eine besonders hohe Flexibilität und/oder eine besonders genaue Erfassung eines eindringenden Fluids kann insbesondere erreicht werden, wenn als erste Fluidsensoreinheit und als zweite Fluidsensoreinheit Fluidsensoreinheiten unterschiedlicher Bauart verwendet werden. Insbesondere sind die erste Fluidsensoreinheit und die zweite Fluidsensoreinheit unterschiedlicher Bauart. Unter "Fluidsensoreinheiten unterschiedlicher Bauart" sollen in diesem Zusammenhang insbesondere Fluidsensoreinheiten verstanden werden, die sich insbesondere in ihrer Funktionsweise, ihrem Aufbau, ihrer Detektionsgenauigkeit, ihrer Detektionsart und/oder ihrem Detektionsmechanismus zumindest teilweise voneinander unterscheiden.

Die erste Fluidsensoreinheit und die zweite Fluidsensoreinheit können beispielsweise eine unterschiedliche Detektionsgenauigkeit und/oder einen unterschiedlichen Detektionsmechanismus aufweisen und dabei insbesondere zur Erfassung von Fluiden mit demselben Aggregatszustand vorgesehen sein. In einer bevorzugten Ausgestaltung der Erfindung wird jedoch vorgeschlagen, dass mittels der ersten Fluidsensoreinheit und der zweiten Fluidsensoreinheit Fluide mit unterschiedlichen Aggregatszuständen erfasst werden. Insbesondere sind die erste Fluidsensoreinheit und die zweite Fluidsensoreinheit zur Erfassung von Fluiden mit unterschiedlichen Aggregatszuständen vorgesehen. Vorzugsweise ist das erste Fluid dabei eine Flüssigkeit, bevorzugt Wasser, und das zweite Fluid ein Gas, bevorzugt eine, insbesondere relative, Luftfeuchtigkeit. Besonders bevorzugt umfasst die erste Fluidsensoreinheit dazu wenigstens ein als Flüssigkeitssensor ausgebildetes erstes Sensorelement und die zweite Fluidsensoreinheit wenigstens ein als Feuchtigkeitssensor ausgebildetes zweites Sensorelement. Hierdurch können vorteilhaft Fluide mit unterschiedlichen Aggregatszuständen erfasst und ein Reaktionsverhalten an diese Fluide angepasst werden.

Bevorzugt wird ferner vorgeschlagen, dass mittels der ersten Fluidsensoreinheit und der zweiten Fluidsensoreinheit räumlich voneinander getrennte Bereiche des Lenksystems überwacht werden, insbesondere innenliegende Bereiche, wie beispielsweise ein Innenraum eines Getriebegehäuses der Getriebeeinheit, ein Innenraum eines Unterstützungsgehäuses der Unterstützungseinheit und/oder ein Innenraum eines Steuergehäuses des Steuergeräts, und/oder außenliegende Bereiche, wie beispielsweise Steckverbindungen zur Verbindung elektronischer Bauteile des Lenksystems, außenliegende Bauteile des Lenkgetriebes, außenliegende Bauteile der Unterstützungseinheit und/oder Dichteinheiten des Getriebegehäuses, des Unterstützungsgehäuses und/oder des Steuergehäuses. Hierdurch können insbesondere sensible Bauteile des Lenksystems geschützt sowie eine Materialbeeinträchtigung und/oder Rostbildung außenliegender Bauteile des Lenksystems überwacht werden.

Besonders vorteilhaft wird vorgeschlagen, dass mittels der ersten Fluidsensoreinheit zumindest ein Bereich eines Steuergeräts, insbesondere des bereits zuvor genannten Steuergeräts, und/oder einer Unterstützungseinheit, insbesondere der bereits zuvor genannten Unterstützungseinheit, zur Erzeugung und/oder Bereitstellung einer Lenkunterstützung und mittels der zweiten Fluidsensoreinheit zumindest ein Bereich eines Lenkgetriebes, insbesondere des bereits zuvor genannten Lenkgetriebes, überwacht wird. Hierdurch kann vorteilhaft eine hohe Betriebssicherheit gewährleistet werden. Vorzugsweise ist die erste Fluidsensoreinheit dabei in dem Bereich des Steuergeräts und/oder der Unterstützungseinheit und die zweite Fluidsensoreinheit in dem Bereich des Lenkgetriebes angeordnet. Unter "einem Bereich eines Objekts" soll dabei insbesondere ein Volumen einest kleinsten gedachten Quaders verstanden werden, welcher das Objekt gerade noch vollständig umschließt.

Gemäß eines weiteren Aspekts der Erfindung, welcher insbesondere für sich allein oder vorteilhaft zusätzlich zu den zuvor genannten Aspekten der Erfindung realisiert werden kann, und bevorzugt mit zumindest einigen, vorteilhaft wenigstens einem Großteil und bevorzugt sämtlichen der zuvor genannten Aspekte kombiniert werden kann, wird ein Lenksystem, insbesondere ein elektrisch unterstütztes Lenksystem, vorgeschlagen, mit zumindest einer ersten Fluidsensoreinheit zur Erfassung wenigstens eines eindringenden ersten Fluids, insbesondere einer ersten Fremdsubstanz, mit zumindest einer räumlich getrennt von der ersten Fluidsensoreinheit angeordneten zweiten Fluidsensoreinheit zur Erfassung wenigstens eines eindringenden zweiten Fluids, insbesondere einer zweiten Fremdsubstanz, und mit zumindest einer Recheneinheit, wobei die erste Fluidsensoreinheit und die zweite Fluidsensoreinheit über separate logische Verbindungen mit der Recheneinheit verbunden sind. Hierdurch können insbesondere die bereits zuvor genannten Vorteile erreicht werden. Insbesondere kann durch eine entsprechende Ausgestaltung des Lenksystems eine vorteilhaft hohe Flexibilität erreicht werden. Insbesondere kann dabei ein vorteilhaft flexibles und/oder situationsabhängiges, Reaktionsverhalten erreicht werden, welches vorteilhaft an unterschiedliche Fehlbetriebe angepasst ist. Ferner können vorteilhaft als Reaktion auf die Erfassung eines Fluids unterschiedliche Maßnahmen getroffen werden, wie beispielsweise eine Komplettabschaltung des Lenksystems, eine Degradierung des Lenksystems, ein Wechsel in einen bestimmten Fahrmodus und/oder lediglich ein Erzeugen einer Hinweismeldung und/oder Warnmeldung. Darüber hinaus kann ein vorteilhaft einfacher Steueralgorithmus bereitgestellt werden. Darunter, dass "die Fluidsensoreinheiten über separate logische Verbindungen mit der Recheneinheit verbunden sind" soll insbesondere verstanden werden, dass die Fluidsensoreinheiten dazu vorgesehen sind, ein mit dem erfassten Fluid korreliertes, vorzugsweise als Logiksignal ausgebildetes, Erfassungssignal auf jeweils getrennten logischen Pfaden an die Recheneinheit zu übermitteln und die Recheneinheit insbesondere dazu vorgesehen ist, anhand des jeweiligen Erfassungssignals ein unterschiedliches Reaktionsverhalten abzuleiten. Darüber hinaus sind die erste Fluidsensoreinheit und die zweite Fluidsensoreinheit vorzugsweise unterschiedlicher Bauart und besonders vorteilhaft zur Erfassung von Fluiden mit unterschiedlichen Aggregatszuständen vorgesehen. Zudem ist die erste Fluidsensoreinheit bevorzugt in einem Bereich eines Steuergeräts des Lenksystems, insbesondere des bereits zuvor genannten Steuergeräts, und/oder einer Unterstützungseinheit des Lenksystems, insbesondere der bereits zuvor genannten Unterstützungseinheit, zur Erzeugung und/oder Bereitstellung einer Lenkunterstützung und die zweite Fluidsensoreinheit in einem Bereich eines Lenkgetriebes, insbesondere des bereits zuvor genannten Lenkgetriebes, des Lenksystems angeordnet.

Das Verfahren zum Betrieb des Lenksystems und das Lenksystem sollen hierbei nicht auf die oben beschriebene Anwendung und Ausführungsform beschränkt sein. Insbesondere können das Verfahren zum Betrieb des Lenksystems und das Lenksystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: zumindest ein Teil eines beispielhaften Lenksystems in einer perspektivischen Darstellung,

- Fig. 2: ein Verbindungsdiagramm einer Recheneinheit sowie zweier Fluidsensoreinheiten des Lenksystems in einer schematischen Darstellung und
- Fig. 3: ein beispielhaftes Ablaufdiagramm eines Verfahrens zum Betrieb des Lenksystems.

### Beschreibung des Ausführungsbeispiels

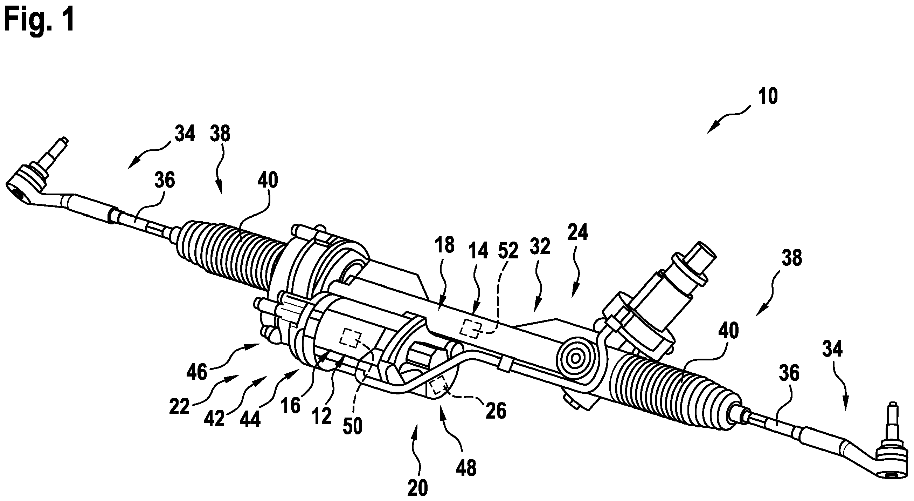

Figur 1 zeigt zumindest einen Teil eines beispielhaften Lenksystems 10 in einer perspektivischen Darstellung. Das Lenksystem 10 ist im vorliegenden Fall als elektrisch unterstütztes Lenksystem ausgebildet und weist demnach eine elektrische Hilfskraftunterstützung auf. Ferner ist das Lenksystem 10 zu einem Einsatz in einem Fahrzeug (nicht dargestellt), insbesondere einem Kraftfahrzeug, vorgesehen. Das Fahrzeug umfasst dabei beispielhaft zumindest zwei unterschiedliche Fahrmodi, insbesondere einen konventionellen und/oder manuellen Fahrmodus und einen autonomen und/oder teilautonomen Fahrmodus. Das Lenksystem 10 weist in einem eingebauten Zustand eine Wirkverbindung mit Fahrzeugrädern des Fahrzeugs auf und ist zur Beeinflussung einer Fahrtrichtung des Fahrzeugs vorgesehen. Prinzipiell ist jedoch auch denkbar, ein Lenksystem als hydraulisch unterstütztes Lenksystem, insbesondere mit einer hydraulischen Hilfskraftunterstützung, auszubilden. Zudem könnte ein Fahrzeug genau einen Fahrmodus, insbesondere einen konventionellen und/oder manuellen Fahrmodus oder einen autonomen und/oder teilautonomen Fahrmodus aufweisen.

Das Lenksystem 10 weist ein Lenkgetriebe 24 auf. Das Lenkgetriebe 24 ist als an sich bekanntes Zahnstangenlenkgetriebe, im vorliegenden Fall beispielhaft als Kugelumlauflenkgetriebe, ausgebildet.

Das Lenkgetriebe 24 umfasst ein Getriebegehäuse 32. Das Getriebegehäuse 32 ist als Außengehäuse ausgebildet. Das Getriebegehäuse 32 ist als Aufnahmeeinheit ausgebildet und insbesondere dazu vorgesehen, zumindest einen Großteil der für einen Betrieb des Lenkgetriebes 24 benötigten Bauteile aufzunehmen und/oder zu lagern. Das Lenkgetriebe 24 umfasst ferner zumindest ein in dem Getriebegehäuse 32 angeordnetes Lenkritzel (nicht dargestellt) und eine in dem Getriebegehäuse 32 angeordnete und mit dem Lenkritzel mechanisch gekoppelte Zahnstange (nicht dargestellt).

Darüber hinaus weist das Lenkgetriebe 24 eine Wirkverbindung mit zumindest zwei der Fahrzeugräder, insbesondere zwei Vorderrädern des Fahrzeugs, auf. Das Lenkgetriebe 24 ist dazu vorgesehen, eine Schwenkbewegung und/oder Drehbewegung der Fahrzeugräder zu bewirken. Das Lenkgetriebe 24 ist dazu vorgesehen, eine Lenkvorgabe in eine Lenkbewegung der Fahrzeugräder umzusetzen. Prinzipiell könnte ein Lenkgetriebe jedoch auch als Schneckenlenkgetriebe und/oder als Schraubenspindellenkgetriebe ausgebildet sein.

Das Lenksystem 10 umfasst ferner zumindest ein Lenkgestänge 34, insbesondere mit zumindest einer Spurstange 36. Im vorliegenden Fall umfasst das Lenksystem 10 auf jeder Fahrzeugseite ein entsprechendes Lenkgestänge 34, welches das Lenkgetriebe 24, insbesondere die Zahnstange, mechanisch mit einem der Fahrzeugräder verbindet. Grundsätzlich ist jedoch auch denkbar, auf ein Lenkgestänge zu verzichten und/oder ein Lenkgestänge in ein Lenkgetriebe zu integrieren.

Das Lenksystem 10 umfasst zudem zumindest eine Dichteinheit 38, insbesondere mit zumindest einem Faltenbalg 40. Im vorliegenden Fall umfasst das Lenksystem 10 auf jeder Fahrzeugseite eine entsprechende Dichteinheit 38, welche das Getriebegehäuse 32 und die Lenkgestänge 34 fluidtechnisch gegeneinander abdichten. Grundsätzlich ist jedoch auch denkbar, eine Dichteinheit andersartig auszubilden und dabei beispielsweise auf einen Faltenbalg zu verzichten.

Darüber hinaus umfasst das Lenksystem 10 eine an sich bekannte Unterstützungseinheit 22 zur Erzeugung und/oder Bereitstellung einer Lenkunterstützung. Die Unterstützungseinheit 22 ist elektrisch ausgebildet. Die Unterstützungseinheit 22 weist eine Wirkverbindung mit dem Lenkgetriebe 24 auf.

Die Unterstützungseinheit 22 umfasst ein Unterstützungsgehäuse 42. Das Unterstützungsgehäuse 42 ist als Außengehäuse ausgebildet. Das Unterstützungsgehäuse 42 ist im vorliegenden Fall mehrteilig ausgebildet und umfasst zumindest ein Motorgehäuse 44 sowie ein Verbindungsgehäuse 46. Das Unterstützungsgehäuse 42 ist als Aufnahmeeinheit ausgebildet und insbesondere dazu vorgesehen, zumindest einen Großteil der für einen Betrieb der Unterstützungseinheit 22 benötigten Bauteile aufzunehmen und/oder zu lagern.

Die Unterstützungseinheit 22 umfasst ferner einen, im vorliegenden Fall insbesondere als Elektromotor ausgebildeten, Motor (nicht dargestellt). Der Motor ist in dem Motorgehäuse 44 angeordnet. Der Motor ist zur Erzeugung der Lenkunterstützung vorgesehen. Zudem umfasst die Unterstützungseinheit 22 einen in dem Verbindungsgehäuse 46 angeordneten und mit der Zahnstange gekoppelten Kugelgewindetrieb (nicht dargestellt) sowie einen in dem Verbindungsgehäuse 46 angeordneten Riemen zur Kraftübertragung zwischen dem Motor und dem Kugelgewindetrieb.

Die Unterstützungseinheit 22 ist dazu vorgesehen, ein Unterstützungsmoment in das Lenkgetriebe 24 einzubringen, insbesondere über den Riemen und den Kugelgewindetrieb. Die Unterstützungseinheit 22 ist dazu vorgesehen, ein, insbesondere von einem Fahrer aufgebrachtes, manuelles Lenkmoment zu unterstützen. Alternativ könnte eine Unterstützungseinheit jedoch auch zumindest teilweise hydraulisch ausgebildet sein. Darüber hinaus könnte eine Unterstützungseinheit, insbesondere anstatt eines Riemens mit einem Kugelgewindetrieb, auch beispielsweise ein, insbesondere zusätzliches, Antriebsritzel umfassen. Zudem könnte eine Unterstützungseinheit auch dazu vorgesehen sein, ein Unterstützungsmoment in eine Lenksäule einzubringen. Darüber hinaus könnte ein Unterstützungsgehäuse auch genau einen Gehäuseteil aufweisen, insbesondere ein Motorgehäuse oder ein Verbindungsgehäuse. Zudem ist denkbar, ein Unterstützungsgehäuse einstückig mit einem Getriebegehäuse auszubilden oder auf ein Unterstützungsgehäuse vollständig zu verzichten.

Des Weiteren weist das Lenksystem 10 ein Steuergerät 20 auf. Das Steuergerät 20 umfasst ein Steuergehäuse 48. Das Steuergehäuse 48 ist als Außengehäuse ausgebildet. Das Steuergehäuse 48 ist als Aufnahmeeinheit ausgebildet und insbesondere dazu vorgesehen, zumindest einen Großteil der für einen Betrieb des Steuergeräts 20 benötigten Bauteile aufzunehmen und/oder zu lagern. Im vorliegenden Fall ist das Steuergehäuse 48 unmittelbar mit dem Unterstützungsgehäuse 42 gekoppelt. Dabei bilden das Steuergerät 20 und die Unterstützungseinheit 22 eine gemeinsame Baugruppe, ein sogenanntes "Powerpack", aus.

Das Steuergerät 20 umfasst ferner eine Recheneinheit 26. Die Recheneinheit 26 ist in dem Steuergehäuse 48 angeordnet. Die Recheneinheit 26 ist elektronisch ausgebildet. Die Recheneinheit 26 umfasst zumindest einen Prozessor (nicht dargestellt), beispielsweise in Form eines Mikroprozessors, und zumindest einen Speicher (nicht dargestellt). Zudem umfasst die Recheneinheit 26 zumindest ein im Speicher hinterlegtes Betriebsprogramm mit zumindest einer Berechnungsroutine, zumindest einer Steuerroutine, zumindest einer Auswerteroutine und zumindest einer Auslöseroutine.

Darüber hinaus kann das Lenksystem 10 weitere Bauteile und/oder Baugruppen umfassen, wie beispielsweise wenigstens eine, vorzugsweise als Lenkrad ausgebildete, Lenkeinheit und/oder wenigstens eine, insbesondere mit dem Lenkgetriebe gekoppelte, Lenksäule.

Erfindungsgemäß umfasst das Lenksystem 10 ferner zumindest zwei Fluidsensoreinheiten 12, 14. Die Fluidsensoreinheiten 12, 14 sind räumlich getrennt voneinander angeordnet. Die Fluidsensoreinheiten 12, 14 sind dazu vorgesehen, räumlich voneinander getrennte Bereiche 16, 18 zu überwachen. Folglich werden im Betrieb mittels der Fluidsensoreinheiten 12, 14 räumlich voneinander getrennte Bereiche 16, 18 überwacht. Zudem sind die Fluidsensoreinheiten 12, 14 unterschiedlicher Bauart. Die Fluidsensoreinheiten 12, 14 sind im vorliegenden Fall zur Erfassung von Fluiden mit unterschiedlichen Aggregatszuständen vorgesehen. Folglich werden im Betrieb mittels der Fluidsensoreinheiten 12, 14 Fluide mit unterschiedlichen Aggregatszuständen erfasst. Alternativ könnte ein Lenksystem jedoch auch zumindest drei und/oder zumindest vier räumlich getrennt voneinander angeordnete Fluidsensoreinheiten umfassen.

Eine erste Fluidsensoreinheit 12 der Fluidsensoreinheiten 12, 14 ist in einem ersten Bereich 16, insbesondere einem Bereich der Unterstützungseinheit 22, angeordnet. Im vorliegenden Fall ist die erste Fluidsensoreinheit 12 beispielhaft im Motorgehäuse 44 angeordnet. Die erste Fluidsensoreinheit 12 ist dabei zur Überwachung des ersten Bereichs 16 vorgesehen. Die erste Fluidsensoreinheit 12 ist zur Erfassung eines eindringenden ersten Fluids, insbesondere einer ersten Fremdsubstanz, vorgesehen. Im vorliegenden Fall ist die erste Fluidsensoreinheit 12 zur Erfassung einer eindringenden Flüssigkeit, insbesondere von eindringendem Wasser, insbesondere in die Unterstützungseinheit 22 und insbesondere das Motorgehäuse 44, vorgesehen. Die erste Fluidsensoreinheit 12 ist dabei während einer gesamten Betriebszeit und/oder einer gesamten Lebenszeit des Lenksystems 10 und/oder des Fahrzeugs, zur Erfassung des ersten Fluids vorgesehen. Zudem ist die erste Fluidsensoreinheit 12 dazu vorgesehen, ein mit einem erfassten ersten Fluid korreliertes erstes Erfassungssignal bereitzustellen.

Dazu umfasst die erste Fluidsensoreinheit 12 zumindest ein erstes Sensorelement 50. Im vorliegenden Fall umfasst die erste Fluidsensoreinheit 12 genau ein als Flüssigkeitssensor ausgebildetes erstes Sensorelement 50.

Alternativ oder zusätzlich könnte eine erste Fluidsensoreinheit oder eine weitere Fluidsensoreinheit jedoch auch in einem Verbindungsgehäuse einer Unterstützungseinheit, wie beispielsweise im Bereich einer Motorwellenausgangsseite und/oder eines Riemenlaufrads, in einem Steuergehäuse eines Steuergeräts und/oder in einem Bereich einer Steckverbindung zur Verbindung elektronischer Bauteile des Lenksystems, wie beispielsweise im Bereich eines sogenannten Wasserpins eines Steckverbinders des Steuergeräts, angeordnet sein. In letzterem Fall kann dabei vorteilhaft eine Flüssigkeit detektiert werden, welche über einen Kabelbaum einläuft und/oder angesaugt wird. Zudem könnte eine erste Fluidsensoreinheit auch mehrere erste Sensorelemente, wie beispielsweise zumindest zwei oder zumindest drei erste Sensorelemente, umfassen. Zudem könnte ein erstes Fluid auch eine Kühlerflüssigkeit und/oder Öl oder dergleichen sein.

Eine zweite Fluidsensoreinheit 14 der Fluidsensoreinheiten 12, 14 ist in einem zweiten Bereich 18, insbesondere einem Bereich des Lenkgetriebes 24, angeordnet. Im vorliegenden Fall ist die zweite Fluidsensoreinheit 14 beispielhaft im Getriebegehäuse 32 angeordnet. Die zweite Fluidsensoreinheit 14 ist dabei zur Überwachung des zweiten Bereichs 18 vorgesehen. Die zweite Fluidsensoreinheit 14 ist zur Erfassung eines eindringenden zweiten Fluids, insbesondere einer zweiten Fremdsubstanz, vorgesehen. Im vorliegenden Fall ist die zweite Fluidsensoreinheit 14 zur Erfassung eines eindringenden Gases, insbesondere einer relativen Luftfeuchtigkeit, insbesondere innerhalb des Getriebegehäuses 32, vorgesehen. Die zweite Fluidsensoreinheit 14 ist dabei während einer gesamten Betriebszeit und/oder einer gesamten Lebenszeit des Lenksystems 10 und/oder des Fahrzeugs, zur Erfassung des zweiten Fluids vorgesehen. Zudem ist die zweite Fluidsensoreinheit 14 dazu vorgesehen, ein mit einem erfassten zweiten Fluid korreliertes zweites Erfassungssignal bereitzustellen.

Dazu umfasst die zweite Fluidsensoreinheit 14 zumindest ein zweites Sensorelement 52. Im vorliegenden Fall umfasst die zweite Fluidsensoreinheit 14 genau ein als Feuchtigkeitssensor ausgebildetes zweites Sensorelement 52.

Alternativ oder zusätzlich könnte eine zweite Fluidsensoreinheit oder eine weitere Fluidsensoreinheit jedoch auch in einem Verbindungsgehäuse einer Unterstützungseinheit, wie beispielsweise im Bereich einer Motorwellenausgangsseite und/oder eines Riemenlaufrads, in einem Steuergehäuse eines Steuergeräts und/oder in einem Bereich eines Lenkritzels und/oder eines Druckstücks des Lenksystems angeordnet sein. Zudem könnte eine zweite Fluidsensoreinheit auch mehrere zweite Sensorelemente, wie beispielsweise zumindest zwei oder zumindest drei zweite Sensorelemente, umfassen. Zudem könnte ein zweites Fluid auch ein Abgas und/oder ein Verbrennungsgas, beispielsweise schmorender Kabel, oder dergleichen sein.

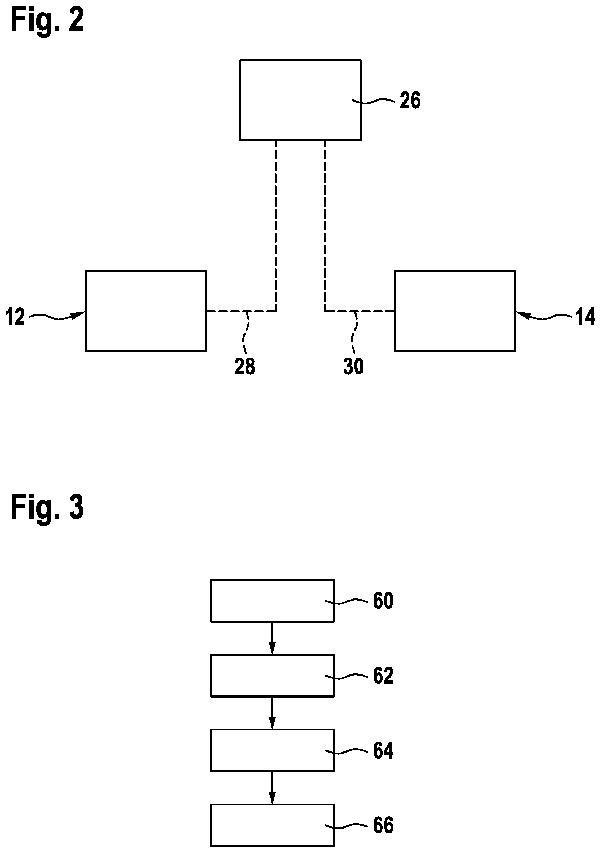

Zur Auswertung der Erfassungssignale der Fluidsensoreinheiten 12, 14, weisen die Fluidsensoreinheiten 12, 14 jeweils eine Wirkverbindung mit der Recheneinheit 26 auf (vgl. insbesondere Figur 2). Im vorliegenden Fall sind die erste Fluidsensoreinheit 12 und die zweite Fluidsensoreinheit 14 über separate logische Verbindungen 28, 30 mit der Recheneinheit 26 verbunden. Die Fluidsensoreinheiten 12, 14 sind dabei dazu vorgesehen, das entsprechende mit dem erfassten Fluid korrelierte und als Logiksignal ausgebildete Erfassungssignal auf jeweils getrennten logischen Pfaden an die Recheneinheit 26 zu übermitteln, sodass die Recheneinheit 26 die Erfassungssignale unterscheiden und eindeutig einer der Fluidsensoreinheiten 12, 14 zuordnen kann. Alternativ könnten eine erste Fluidsensoreinheit und eine zweite Fluidsensoreinheit jedoch auch mittels einem einzelnen Verbindungspfad und/oder drahtlos mit einer Recheneinheit verbunden sein. In diesem Fall ist beispielsweise denkbar, dass die erste Fluidsensoreinheit und/oder die zweite Fluidsensoreinheit dazu vorgesehen sind, ein jeweiliges Erfassungssignal entsprechend zu kodieren, sodass die Recheneinheit die Fluidsensoreinheiten anhand einer jeweiligen Kodierung eindeutig identifizieren kann.

Darüber hinaus ist die Recheneinheit 26 im vorliegenden Fall erfindungsgemäß dazu vorgesehen, als Reaktion auf die Erfassung des ersten Fluids wenigstens ein erstes Reaktionsverhalten und als Reaktion auf die Erfassung des zweiten Fluids wenigstens ein von dem ersten Reaktionsverhalten zumindest teilweise abweichendes zweites Reaktionsverhalten auszulösen, wodurch insbesondere ein vorteilhaft flexibles und/oder situationsabhängiges Reaktionsverhalten erreicht werden kann. Prinzipiell ist dabei denkbar, dass die Recheneinheit 26 eine Entscheidung über die Ausführung des entsprechenden Reaktionsverhaltens selbst trifft und/oder die Ausführung des entsprechenden Reaktionsverhaltens selbst übernimmt. Vorzugsweise weist die Recheneinheit 26 jedoch eine Verbindung mit einem zentralen weiteren Steuergerät (nicht dargestellt) des Fahrzeugs auf, wobei das weitere Steuergerät eine Entscheidung über die Ausführung des entsprechenden Reaktionsverhaltens trifft sowie die Ausführung des entsprechenden Reaktionsverhaltens durchführt.

Das erste Reaktionsverhalten, welches im vorliegenden Fall insbesondere auf eine Erfassung eines Wassereintritts folgt, und das zweite Reaktionsverhalten, welches im vorliegenden Fall insbesondere mit einer relativen Luftfeuchtigkeit im Lenksystem 10, insbesondere im Getriebegehäuse 32, korreliert ist, unterscheiden sich zumindest in einer Art einer Reaktion voneinander.

Zudem unterscheiden sich das erste Reaktionsverhalten und das zweite Reaktionsverhalten zumindest in einer Geschwindigkeit einer Reaktion voneinander. Das erste Reaktionsverhalten bewirkt dabei eine zeitlich schnellere Reaktion, insbesondere in einem ersten Zeitraum je nach Anforderung zwischen 30 s und 60 s, wodurch insbesondere die Unterstützungseinheit 22 und das Steuergerät 20 vor einer Funktionsbeeinträchtigung geschützt werden können, während das zweite Reaktionsverhalten eine im Vergleich zum ersten Reaktionsverhalten zeitlich langsamere Reaktion, insbesondere in einem zweiten Zeitraum von mehreren Tagen, mehreren Wochen oder mehreren Monaten und insbesondere abhängig von einem Wert und/oder einer Höhe der relativen Luftfeuchtigkeit, bewirkt.

Des Weiteren wird im vorliegenden Fall zumindest bei dem ersten Reaktionsverhalten ein aktueller Fahrmodus berücksichtigt und eine mit dem Reaktionsverhalten verknüpfte Reaktion in Abhängigkeit von dem aktuellen Fahrmodus angepasst. Dabei wird vorteilhaft in zumindest einem Betriebszustand, in welchem ein aktueller Fahrmodus ein autonomer und/oder teilautonomer Fahrmodus ist, zumindest eine Aktion, welche zu einem Verlassen des autonomen und/oder teilautonomen Fahrmodus führt, ausgeführt.

Ein typisches erstes Reaktionsverhalten, welches insbesondere in dem definierten ersten Zeitraum zwischen 30 s und 60 s durchgeführt wird, kann dabei beispielsweise in einer Komplettabschaltung des Lenksystems 10, in einer Degradierung des Lenksystems 10, in einem Einleiten eines "Save-Stops" und nachfolgendem Abschalten der Unterstützungseinheit 22 und/oder des Steuergeräts 20, und/oder zumindest in einem Betriebszustand, in welchem ein aktueller Fahrmodus dem autonomen und/oder teilautonomen Fahrmodus entspricht, in einem Verlassen des aktuellen Fahrmodus bestehen. In letzterem Fall kann ein Fahrer vorteilhaft in dem ersten Zeitraum zwischen 30 s und 60 s dazu aufgefordert werden, eine Lenkung des Fahrzeugs zu übernehmen.

Ein typisches zweites Reaktionsverhalten, welches insbesondere in dem definierten zweiten Zeitraum von mehreren Tagen, mehreren Wochen oder mehreren Monaten durchgeführt wird, kann beispielsweise in einem Erzeugen einer Hinweismeldung und/oder Warnmeldung und/oder in einem Verbot einer Verwendung des autonomen und/oder teilautonomen Fahrmodus und/oder in einer Blockierung des Lenksystems 10 bei einem Starvorgang bestehen. Zur Auslösung des zweiten Reaktionsverhaltens wird dabei vorzugsweise ein Wert der relativen Luftfeuchtigkeit über die Betriebsstunden des Lenksystems 10 und/oder eine gesamte Lebensdauer des Lenksystems 10, beispielsweise mittels eines gemittelten Schätzwerts für die Luftfeuchtigkeit für Zeiten, in welchen das Lenksystem 10 nicht betrieben wird, auf-akkumuliert und/oder integriert und mit einem definierten und/oder definierbaren Grenzwert verglichen, wobei bei Überschreiten des Grenzwerts das zweite Reaktionsverhalten ausgelöst wird.

Figur 3 zeigt ein beispielhaftes Ablaufdiagramm eines derartigen Verfahrens zum Betrieb des Lenksystems 10, wobei die Recheneinheit 26 dazu vorgesehen ist, das Verfahren durchzuführen und dazu insbesondere ein Computerprogramm mit entsprechenden Programmcodemitteln aufweist.

In einem Verfahrensschritt 60 wird mittels der ersten Fluidsensoreinheit 12 ein eindringendes erstes Fluid, insbesondere Wasser, und/oder mittels der zweiten Fluidsensoreinheit 14 ein eindringendes zweites Fluid, insbesondere eine relative Luftfeuchtigkeit, erfasst. Die erste Fluidsensoreinheit 12 und die zweite Fluidsensoreinheit 14 sind dabei dazu vorgesehen, während einer gesamten Betriebszeit und/oder einer gesamten Lebenszeit des Lenksystems 10 und/oder des Fahrzeugs, ein entsprechendes Fluid zu erfassen. Die erste Fluidsensoreinheit 12 stellt in Abhängigkeit von dem erfassten ersten Fluid ein erstes Erfassungssignal bereit. Die zweite Fluidsensoreinheit 14 stellt in Abhängigkeit von dem erfassten zweiten Fluid ein zweites Erfassungssignal bereit. Das erste Erfassungssignal und das zweite Erfassungssignal sind im vorliegenden Fall Logiksignale.

In einem darauffolgenden Verfahrensschritt 62 werden die Erfassungssignale ausgewertet, wobei zwischen mehreren Fällen unterschieden werden kann.

Wird mittels der Fluidsensoreinheiten 12, 14 kein Fluid erfasst und/oder kein Erfassungssignal von den Fluidsensoreinheiten 12, 14 bereitgestellt, so wird auch kein Reaktionsverhalten ausgelöst.

Wird lediglich mittels der ersten Fluidsensoreinheit 12 ein erstes Fluid erfasst und/oder lediglich das erste Erfassungssignal bereitgestellt, so wird das erste Reaktionsverhalten, insbesondere eine schnelle Reaktion, ausgelöst.

Wird lediglich mittels der zweiten Fluidsensoreinheit 14 ein zweites Fluid erfasst und/oder lediglich das zweite Erfassungssignal bereitgestellt, so wird das zweite Reaktionsverhalten, insbesondere eine langsame Reaktion, ausgelöst.

Wird mittels der ersten Fluidsensoreinheit 12 und der zweiten Fluidsensoreinheit 14 ein Fluid erfasst und/oder das erste Erfassungssignal und das zweite Erfassungssignal bereitgestellt, so wird das erste Reaktionsverhalten, insbesondere eine schnelle Reaktion, ausgelöst.

In einem darauffolgenden Verfahrensschritt 64 wird ein aktueller Fahrmodus erfasst. Zumindest bei dem ersten Reaktionsverhalten wird dann eine mit dem ersten Reaktionsverhalten verknüpfte Reaktion in Abhängigkeit von dem aktuellen Fahrmodus angepasst.

In einem darauffolgenden Verfahrensschritt 66 wird das erste Reaktionsverhalten oder das zweite Reaktionsverhalten und somit insbesondere eine mit dem entsprechenden Reaktionsverhalten verknüpfte Aktion ausgeführt.

Das beispielhafte Ablaufdiagramm in Figur 3 soll dabei insbesondere lediglich beispielhaft ein Verfahren zum Betrieb des Lenksystems 10 beschreiben. Insbesondere können einzelne Verfahrensschritte und/oder eine Abfolge der Verfahrensschritte variieren. Dabei könnte beispielsweise auf eine Erfassung eines aktuellen Fahrmodus und somit insbesondere den Verfahrensschritt 64 verzichtet werden. Zudem ist denkbar, einen aktuellen Fahrmodus zeitlich vor einer Detektion eines Fluids zu erfassen.

## Patentansprüche

1. Verfahren zum Betrieb eines Lenksystems (10), insbesondere eines elektrisch unterstützten Lenksystems, wobei das Lenksystem (10) wenigstens eine erste Fluidsensoreinheit (12) zur Erfassung wenigstens eines eindringenden ersten Fluids und zumindest eine räumlich getrennt von der ersten Fluidsensoreinheit (12) angeordnete zweite Fluidsensoreinheit (14) zur Erfassung wenigstens eines eindringenden zweiten Fluids umfasst, und wobei als Reaktion auf die Erfassung des ersten Fluids wenigstens ein erstes Reaktionsverhalten und als Reaktion auf die Erfassung des zweiten Fluids wenigstens ein von dem ersten Reaktionsverhalten zumindest teilweise abweichendes zweites Reaktionsverhalten ausgelöst wird, **dadurch gekennzeichnet, dass** bei zumindest einem der Reaktionsverhalten ein aktueller Fahrmodus in Form eines autonomen und/oder teilautonomen Fahrmodus berücksichtigt wird und eine mit dem Reaktionsverhalten verknüpfte Reaktion in Abhängigkeit von dem aktuellen Fahrmodus angepasst wird.

2. Verfahren nach Anspruch 1, **dadurch gekennzeichnet, dass** sich das erste Reaktionsverhalten und das zweite Reaktionsverhalten zumindest in einer Art einer Reaktion voneinander unterscheiden.

3. Verfahren nach Anspruch 1 oder 2, **dadurch gekennzeichnet, dass** sich das erste Reaktionsverhalten und das zweite Reaktionsverhalten zumindest in einer Geschwindigkeit einer Reaktion voneinander unterscheiden.

4. Verfahren nach Anspruch 3, **dadurch gekennzeichnet, dass** das erste Reaktionsverhalten eine zeitlich schnellere Reaktion und das zweite Reaktionsverhalten eine im Vergleich zum ersten Reaktionsverhalten zeitlich langsamere Reaktion bewirkt.

5. Verfahren nach einem der vorhergehenden Ansprüche, **dadurch gekennzeichnet, dass** als erste Fluidsensoreinheit (12) und als zweite Fluidsensoreinheit (14) Fluidsensoreinheiten unterschiedlicher Bauart verwendet werden.

6. Verfahren nach einem der vorhergehenden Ansprüche, **dadurch gekennzeichnet, dass** mittels der ersten Fluidsensoreinheit (12) und der zweiten Fluidsensoreinheit (14) Fluide mit unterschiedlichen Aggregatszuständen erfasst werden.

7. Verfahren nach einem der vorhergehenden Ansprüche, **dadurch gekennzeichnet, dass** mittels der ersten Fluidsensoreinheit (12) und der zweiten Fluidsensoreinheit (14) räumlich voneinander getrennte Bereiche (16, 18) überwacht werden.

8. Verfahren nach Anspruch 7, **dadurch gekennzeichnet, dass** mittels der ersten Fluidsensoreinheit (12) zumindest ein Bereich (16) eines Steuergeräts (20) und/oder einer Unterstützungseinheit (22) zur Erzeugung und/oder Bereitstellung einer Lenkunterstützung und mittels der zweiten Fluidsensoreinheit (14) zumindest ein Bereich (18) eines Lenkgetriebes (24) überwacht wird.

9. Steuergerät (20) eines Lenksystems (10) nach Ansprüchen 1 bis 8 mit einer Recheneinheit (26), die zur Durchführung eines Verfahrens nach einem der vorhergehenden Ansprüche eingerichtet ist.

10. Lenksystem (10), insbesondere elektrisch unterstütztes Lenksystem, mit zumindest einer ersten Fluidsensoreinheit (12) zur Erfassung wenigstens eines eindringenden ersten Fluids, mit zumindest einer räumlich getrennt von der ersten Fluidsensoreinheit (12) angeordneten zweiten Fluidsensoreinheit (14) zur Erfassung wenigstens eines eindringenden zweiten Fluids, und mit zumindest einer Recheneinheit (26), welche zur Durchführung eines Verfahrens nach einem der Ansprüche 1 bis 8 vorgesehen ist.

11. Lenksystem (10) nach Anspruch 10, **dadurch gekennzeichnet, dass** die erste Fluidsensoreinheit (12) und die zweite Fluidsensoreinheit (14) über separate logische Verbindungen (28, 30) mit der Recheneinheit (26) verbunden sind.

12. Lenksystem (10) nach Anspruch 10 oder 11, **dadurch gekennzeichnet, dass** die erste Fluidsensoreinheit (12) und die zweite Fluidsensoreinheit (14) unterschiedlicher Bauart und zur Erfassung von Fluiden mit unterschiedlichen Aggregatszuständen vorgesehen sind.

13. Lenksystem (10) nach einem der Ansprüche 10 bis 12, **dadurch gekennzeichnet, dass** die erste Fluidsensoreinheit (12) in einem Bereich (16) eines Steuergeräts (20) des Lenksystems (10) und/oder einer Unterstützungseinheit (22) des Lenksystems (10) zur Erzeugung und/oder Bereitstellung einer Lenkunterstützung und die zweite Fluidsensoreinheit (14) in einem Bereich (18) eines Lenkgetriebes (24) des Lenksystems (10) angeordnet ist.

## Claims

1. Method for operating a steering system (10), in particular an electrically assisted steering system, the steering system (10) comprising at least one first fluid sensor unit (12) for the detection of at least one penetrating first fluid and at least one second fluid sensor unit (14) which is arranged separated spatially from the first fluid sensor unit (12) for the detection of at least one penetrating second fluid, and at least one first reaction behaviour being triggered as a reaction to the detection of the first fluid, and at least one second reaction behaviour which differs at least in part from the first reaction behaviour being triggered as a reaction to the detection of the second fluid, **characterized in that**, in the case of at least one of the reaction behaviours, a current driving mode in the form of an autonomous and/or partially autonomous driving mode is taken into consideration, and a reaction which is linked to the reaction behaviour is adapted in a manner which is dependent on the current driving mode.

2. Method according to Claim 1, **characterized in that** the first reaction behaviour and the second reaction behaviour differ from one another at least in terms of a type of a reaction.

3. Method according to Claim 1 or 2, **characterized in that** the first reaction behaviour and the second reaction behaviour differ from one another at least in terms of a speed of a reaction.

4. Method according to Claim 3, **characterized in that** the first reaction behaviour brings about a temporally faster reaction and the second reaction behaviour brings about a temporally slower reaction in comparison with the first reaction behaviour.

5. Method according to one of the preceding claims, **characterized in that** fluid sensor units of different design are used as the first fluid sensor unit (12) and as the second fluid sensor unit (14).

6. Method according to one of the preceding claims, **characterized in that** fluids with different states of aggregation are detected by means of the first fluid sensor unit (12) and the second fluid sensor unit (14).

7. Method according to one of the preceding claims, **characterized in that** regions (16, 18) which are spatially separated from one another are monitored by means of the first fluid sensor unit (12) and the second fluid sensor unit (14).

8. Method according to Claim 7, **characterized in that** at least one region (16) of a control unit (20) and/or an assistance unit (22) for producing and/or providing steering assistance is monitored by means of the first fluid sensor unit (12), and at least one region (18) of a steering gear (24) is monitored by means of the second fluid sensor unit (14).

9. Control unit (20) of a steering system (10) according to Claims 1 to 8 with a computing unit (26) which is set up to carry out a method according to one of the preceding claims.

10. Steering system (10), in particular electrically assisted steering system, with at least one first fluid sensor unit (12) for the detection of at least one penetrating first fluid, with at least one second fluid sensor unit (14) which is arranged separated spatially from the first fluid sensor unit (12) for the detection of at least one penetrating second fluid, and with at least one computing unit (26) which is provided to carry out a method according to one of Claims 1 to 8.

11. Steering system (10) according to Claim 10, **characterized in that** the first fluid sensor unit (12) and the second fluid sensor unit (14) are connected via separate logic connections (28, 30) to the computing unit (26) .

12. Steering system (10) according to Claim 10 or 11, **characterized in that** the first fluid sensor unit (12) and the second fluid sensor unit (14) are of different design and are provided for the detection of fluids with different states of aggregation.

13. Steering system (10) according to one of Claims 10 to 12, **characterized in that** the first fluid sensor unit (12) is arranged in a region (16) of a control unit (12) of the steering system (10) and/or an assistance unit (22) of the steering unit (10) for producing and/or providing steering assistance, and the second fluid sensor unit (14) is arranged in a region (18) of a steering gear (24) of the steering system (10).

## Revendications

1. Procédé permettant de faire fonctionner un système de direction (10), en particulier un système de direction assistée électrique, le système de direction (10) comprenant au moins une première unité de capteur de fluide (12) pour détecter au moins un premier fluide pénétrant et au moins une deuxième unité de capteur de fluide (14), disposée de manière physiquement séparée de la première unité de capteur de fluide (12), pour détecter au moins un deuxième fluide pénétrant, et dans lequel, en réaction à la détection du premier fluide, au moins un premier comportement en réaction est déclenché, et en réaction à la détection du deuxième fluide, au moins un deuxième comportement en réaction, au moins partiellement différent du premier comportement en réaction, est déclenché,
**caractérisé en ce que** pour au moins l'un des comportements en réaction, un mode de conduite actuel sous la forme d'un mode de conduite autonome et/ou semi-autonome est pris en considération, et une réaction associée au comportement en réaction est adaptée en fonction du mode de conduite actuel.

2. Procédé selon la revendication 1, **caractérisé en ce que** le premier comportement en réaction et le deuxième comportement en réaction sont différents l'un de l'autre au moins par un type d'une réaction.

3. Procédé selon la revendication 1 ou 2, **caractérisé en ce que** le premier comportement en réaction et le deuxième comportement en réaction sont différents l'un de l'autre au moins par une vitesse d'une réaction.

4. Procédé selon la revendication 3, **caractérisé en ce que** le premier comportement en réaction provoque une réaction plus rapide dans le temps, et le deuxième comportement en réaction provoque une réaction plus lente dans le temps en comparaison avec le premier comportement en réaction.

5. Procédé selon l'une quelconque des revendications précédentes, **caractérisé en ce que** comme première unité de capteur de fluide (12) et comme deuxième unité de capteur de fluide (14), des unités de capteur de fluide de construction différente sont utilisées.

6. Procédé selon l'une quelconque des revendications précédentes, **caractérisé en ce que** des fluides ayant différents états physiques sont détectés au moyen de la première unité de capteur de fluide (12) et de la deuxième unité de capteur de fluide (14).

7. Procédé selon l'une quelconque des revendications précédentes, **caractérisé en ce que** des zones (16, 18) physiquement séparées l'une de l'autre sont surveillées par la première unité de capteur de fluide (12) et la deuxième unité de capteur de fluide (14) .

8. Procédé selon la revendication 7, **caractérisé en ce que** la première unité de capteur de fluide (12) surveille au moins une zone (16) d'un appareil de commande (20) et/ou d'une unité d'assistance (22) pour générer et/ou fournir une direction assistée, et la deuxième unité de capteur de fluide (14) surveille au moins une zone (18) d'un mécanisme de direction (24).

9. Appareil de commande (20) d'un système de direction (10) selon les revendications 1 à 8, comprenant une unité de calcul (26) qui est aménagée pour exécuter un procédé selon l'une quelconque des revendications précédentes.

10. Système de direction (10), en particulier système de direction assistée électrique, comprenant au moins une première unité de capteur de fluide (12) pour détecter au moins un premier fluide pénétrant, comprenant au moins une deuxième unité de capteur de fluide (14), disposée de manière physiquement séparée de la première unité de capteur de fluide (12), pour détecter au moins un deuxième fluide pénétrant, et comprenant au moins une unité de calcul (26) qui est prévue pour exécuter un procédé selon l'une quelconque des revendications 1 à 8.

11. Système de direction (10) selon la revendication 10, **caractérisé en ce que** la première unité de capteur de fluide (12) et la deuxième unité de capteur de fluide (14) sont reliées à l'unité de calcul (26) par l'intermédiaire de connexions logiques séparées (28, 30).

12. Système de direction (10) selon la revendication 10 ou 11, **caractérisé en ce que** la première unité de capteur de fluide (12) et la deuxième unité de capteur de fluide (14) de construction différente sont prévues pour détecter des fluides ayant différents états physiques.

13. Système de direction (10) selon l'une quelconque des revendications 10 à 12, **caractérisé en ce que** la première unité de capteur de fluide (12) est disposée dans une zone (16) d'un appareil de commande (20) du système de direction (10) et/ou d'une unité d'assistance (22) du système de direction (10) pour générer et/ou fournir une direction assistée, et la deuxième unité de capteur de fluide (14) est disposée dans une zone (18) d'un mécanisme de direction (24) du système de direction (10).
